Europäisches Patentamt

European Patent Office

Office européen des brevets

(19)

(11) Veröffentlichungsnummer : **0 059 795**
**B1**

# EUROPÄISCHE PATENTSCHRIFT

(12)

(45) Veröffentlichungstag der Patentschrift :
**15.05.85**

(21) Anmeldenummer : **81110182.3**

(22) Anmeldetag : **05.12.81**

(51) Int. Cl.⁴ : **B 60 C 23/04**

(54) **Pneumatisch betätigbarer Druckschalter zur Reifendrucküberwachung.**

(30) Priorität : **10.03.81 DE 3108998**

(43) Veröffentlichungstag der Anmeldung :
**15.09.82 Patentblatt 82/37**

(45) Bekanntmachung des Hinweises auf die Patenterteilung : **15.05.85 Patentblatt 85/20**

(84) Benannte Vertragsstaaten :
**DE FR GB IT**

(56) Entgegenhaltungen :
**DE-A- 2 540 353**
**DE-A- 2 832 447**
**US-A- 3 602 884**
**US-A- 3 961 309**
**US-A- 4 180 795**

(73) Patentinhaber : **ROBERT BOSCH GMBH**
**Postfach 50**
**D-7000 Stuttgart 1 (DE)**

(72) Erfinder : **Buchschmid, Emil**
**Widukindstrasse 9**
**D-8501 Rosstal (DE)**
Erfinder : **Frenznick, Anton**
**Elbestrasse 4f**
**D-8500 Nürnberg (DE)**
Erfinder : **Stradtmann, Günther**
**Grüberstrasse 30**
**D-8800 Ansbach (DE)**
Erfinder : **Burkel, Rainer, Dipl.-Ing.**
**4 Square Copernic**
**F-78000 Le Chesnay (FR)**
Erfinder : **Denamps, Jean**
**37 Quai Dewaux**
**D-92000 Aoneies (DE)**

## Beschreibung

### Stand der Technik

Die Erfindung geht aus von einem pneumatisch betätigbaren Druckschalter zur Reifendrucküberwachung nach der Gattung des Hauptanspruchs. Bei einer bekannten Schalterausführung (DE-A-28 32 447) befindet sich die Referenzdruckkammer in einem metallischen Schaltergehäuse, das mit einem Gewindeansatz in eine entsprechende Bohrung der Fahrzeugfelge eingeschraubt ist. Der Druck in der Referenzdruckkammer ist so eingestellt, daß bei einem ausreichenden Luftdruck im Fahrzeugreifen die Membran am Schaltkontakt einen Stromkreis schließt. Bei zu geringem Luftdruck im Reifen drückt das Gas in der Referenzdruckkammer die Membran zum Reinfeninneren hin und der Stromkreis wird unterbrochen. Über einen am Schaltkontakt angeschlossenen Schwingkreis wird der Reifendruck drahtlos überwacht.

Obwohl bei dieser Schalterausführung die Gastemperatur in der Referenzdruckkammer sich an die Lufttemperatur im Fahrzeugreifen anpaßt, kann es vorkommen, daß durch Wärmestrahlung und Wärmeleitung über die Felge und über das metallische Schaltergehäuse, z. B. bei längeren Bremsmanövern die Temperatur in der Referenzdruckkammer höher wird als die Lufttemperatur im Reifen. In einem solchen Fall würde der Stromkreis geöffnet und es würde damit ein Fehlsignal abgegeben.

Der erfindungsgemäße pneumatisch betätigbare Druckschalter mit den kennzeichnenden Merkmalen des Hauptanspruchs hat demgegenüber den Vorteil, daß durch die Isolierstoffkapsel hindurch das metallische Gehäuse für die Referenzdruckkammer weder durch Wärmestrahlung von außen noch durch Wärmeleitung über die Felge des Fahrzeuges erhitzt werden kann, so daß die Anpassung der Temperatur in der Referenzdruckkammer an die Lufttemperatur im Fahrzeugreifen verbessert wird. Ein weiterer Vorteil besteht darin, daß das Schaltergehäuse wesentlich kleiner und leichter gemacht werden kann, was einerseits die Temperaturanpassung erleichtert und andererseits die auszugleichende Unwucht des Rades verringert. Außerdem lassen sich bei verbesserter Funktionsgenauigkeit die einzelnen Teile des Druckschalters relativ einfach herstellen und montieren.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist dabei eine Isolierstoffkapsel, die mit einem das Schaltergehäuse umgebenden Gewindeansatz in eine Felgenbohrung einzuschrauben ist. Durch diese Anordnung wird sichergestellt, daß einerseits das Schaltergehäuse nicht über die Felge hinaus nach innen vorsteht, und daß andererseits selbst bei Undichtigkeiten zwischen dem Schaltergehäuse und der Isolierstoffkapsel der Reifendruck nicht abfallen kann. Eine weitere Verbesserung der Temperaturnachführung für das Gas in der Referenzdruckkammer wird dadurch erzielt, daß der Gewindeansatz der Isolierstoffkapsel über die Membran hinaus vorsteht, so daß die Membran nicht mehr wie bisher von einer gelochten Scheibe abgedeckt werden muß, um sie gegen Beschädigung bei einem Reifenwechsel zu schützen.

Eine besondere Vereinfachung bei der Herstellung des Druckschalters ist dadurch möglich, daß nach dem Einstellen des Gasdruckes in der Referenzdruckkammer die Einfüllöffnung im Schaltergehäuse durch eine eingepreßte Stahlkugel gasdicht verschlossen wird.

### Zeichnung

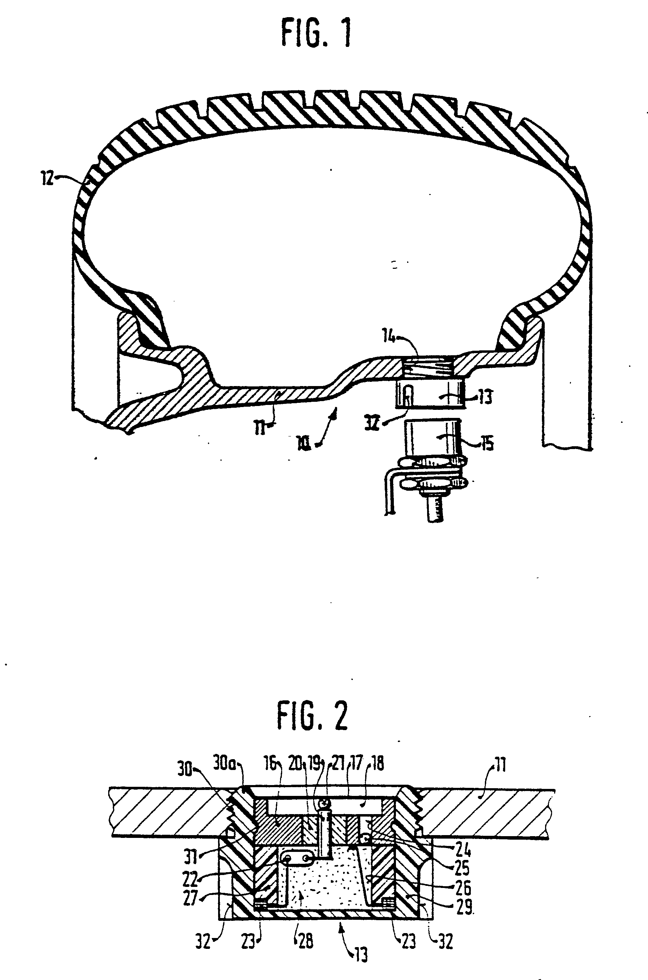

Ein Ausführungsbeispiel der Erfindung ist in der Zeichnung dargestellt und in der nachfolgenden Beschreibung näher erläutert. Es zeigt Figur 1 den Querschnitt durch das Rad eines Kraftfahrzeuges mit einem in der Felge eingesetzten erfindungsgemäßen Druckschalter und Figur 2 den Druckschalter in vergrößerter Darstellung im Querschnitt.

### Beschreibung des Ausführungsbeispieles

In Figur 1 ist das im Querschnitt dargestellte Rad eines Kraftfahrzeuges mit 10 bezeichnet. Auf seiner Felge 11 ist ein schlauchloser Reifen 12 montiert und aufgepumpt. Der Luftdruck im Reifen 12 soll mit Hilfe eines pneumatisch zu betätigenden Druckschalters 13 überwacht werden, der in einer Gewindebohrung 14 der Felge 11 eingeschraubt ist. Der Druckschalter 13 wirkt mit einem Hochfrequenzgeber 15 zusammen, der an einer nicht dargestellten Fahrzeugachse fest montiert ist und ein vom Druckschalter 13 ausgelöstes Signal drahtlos aufnimmt, sobald der Druckschalter 13 am Geber 15 mit jeder Umdrehung des Rades 10 vorbeibewegt wird.

Figur 2 zeigt den Querschnitt des Druckschalters 13 mit einem metallischen Schaltergehäuse 16. Das Schaltergehäuse 16 trägt vorn eine elektrisch leitende Membran 17, die ringförmig an ihrem Rand mit dem Schaltergehäuse 16 verschweißt ist. Im Schaltergehäuse 16 ist außerdem eine Referenzdruckkammer 18 eingearbeitet, die zum Reifeninneren hin durch die Membran 17 abgeschlossen ist. Innerhalb der Referenzdruckkammer 18 sitzt ein Kontaktstift 19, der in einer druckdichten Glasdurchführung 20 elektrisch isoliert im Schaltergehäuse 16 eingeschmolzen ist und mit seinem äußeren Ende aus dem Schaltergehäuse 16 vorsteht. Der Kontaktstift 19 trägt vorne eine Kontaktkugel 21, die mit einer Schaltfläche der Membran 17 zusammenwirkt. Bei einem ausreichenden Luftdruck im Reifen 12 liegt die Schaltfläche der Membran 17 an der Kontaktkugel 21 an und beim Absinken des Luftdruckes unter einem vorgegebenen Wert hebt die Membran 17 ab und öffnet einen elektrischen Stromkreis. In dem Stromkreis befindet sich ein Kondensator 22 und eine Spule 23, die zu einem Schwingkreis zusammengeschaltet sind. Dieser Schwingkreis ist einerseits mit dem Kontaktstift 19 und andererseits über das Schaltergehäuse 16 mit der Membran 17 elektrisch verbunden.

Über eine Gehäusebohrung 24 wird die Referenzdruckkammer 18 zunächst mit einem Gas gefüllt. Dieses Gas wird auf den erforderlichen Druck gebracht und anschließend wird die Gehäusebohrung 24 durch eine Stahlkugel 25 gasdicht verschlossen, indem die Stahlkugel 25 mit Übermaß in die Gehäusebohrung 24 eingepreßt und kalt verschweißt wird. Der Kondensator 22 des Schwingkreises befindet sich in einer Bohrung 26 eines zylindrischen Spulenkörpers 27, an dessen unterem Ende die Spule 23 des Schwingkreises aufgebracht ist. Der zylindrische Spulenkörper 27 ist mit dem Schaltergehäuse 16 zu einer Baueinheit 28 mit gleichem Außendurchmesser vereinigt. Innerhalb der Bohrung 26 des Spulenkörpers 27 liegen auch die elektrischen Verbindungen zwischen dem Kondensator 22, der Spule 23, dem Kontaktstift 19 und dem Schaltergehäuse 16. Zur Fixierung des Kondensators 22 und der elektrischen Verbindungen ist die Bohrung 26 mit Füllstoff ausgefüllt.

Durch den in der Referenzdruckkammer 18 herrschenden Gasdruck ist vorgegeben, welcher Luftdruck im Reifen 13 erforderlich ist, damit der Schwingkreis über die Membran 17 geschlossen wird. Sobald dieser Luftdruck unter einer bestimmten Grenze abfällt, hebt die Membran 17 vom Kontaktstift 19 ab und öffnet den Schwingkreis zur Auslösung eines Signales. Da sich sowohl der Luftdruck im Reifen 12 als auch der in der Referenzdruckkammer 18 in Abhängigkeit von der Temperatur im Reifeninneren ändert, werden temperaturbedingte Schwankungen des Luftdruckes im Reifen 12 wunschgemäß nicht vom Schalter 13 erfaßt.

Um eine Beeinflussung der Temperatur in der Referenzdruckkammer 18 durch Wärmestrahlung oder Wärmeleitung von außen zu verhindern, ist das Schaltergehäuse 16 und der Schwingkreis mit dem Kondensator 22 und der Spule 23 in einer zum Reifeninneren hin offenen Isolierstoffkapsel 29 aus wärmeisolierendem Werkstoff befestigt. Die Isolierstoffkapsel 29 trägt vorn einen das Schaltergehäuse 16 umgebenden Gewindeansatz 30, mit dem der Druckschalter 13 in die Gewindebohrung 14 der Felge 11 einschraubbar ist. Der Gewindeansatz 30 der Isolierstoffkapsel 29 steht mit seinem Rand 30a über die Ebene der Membran 17 hinaus vor, so daß die Membran 17 bei einem Reifenwechsel durch den Gewindeansatz 30 geschützt ist. Die vormontierte, zylindrische Baueinheit 28 aus Schaltergehäuse 16 und Spulenkörper 27 ist in die Isolierstoffkapsel 29 eingepreßt und verklebt. Eine auf der Innenseite der Isolierstoffkapsel 29 im oberen Bereich angebrachte, vergrößert dargestellte Ringwulst 31 bewirkt, daß das Schaltergehäuse 16 in der Isolierstoffkapsel 39 mit einem Preßsitz eingesetzt wird. Die Isolierstoffkapsel 29 ist außen mit zwei einander gegenüberliegenden Nuten 32 versehen, in die ein Werkzeug zum luftdichten Einschrauben der Isolierstoffkapsel 29 in die Gewindebohrung 14 der Felge 11 angesetzt werden kann.

Mit der erfindungsgemäßen Ausführung eines Druckschalters zur Reifendrucküberwachung läßt sich gegenüber den bekannten Druckschaltern die Temperaturnachführung der Referenzdruckkammer wesentlich verbessern, da der eigentliche Schalter nunmehr von der Felge thermisch besser isoliert ist und über die Membran unmittelbar mit der Luft im Reifeninneren thermisch verbunden ist. Außerdem konnte das Gewicht des Schalters gering gehalten werden und darüber hinaus werden einfach herzustellende Teile verwendet. Außerdem wird zur Herabsetzung der Herstellkosten eine aus relativ großem Durchmesser gewickelte Spule 23 verwendet, für die nur ein relativ kleiner, preiswerter Kondensator benötigt wird.

**Patentansprüche**

1. Pneumatisch betätigbarer Druckschalter zur Reifendrucküberwachung mit einer ringförmig an einem Schaltergehäuse (16) befestigten, elektrisch leitenden Membran (17), die eine mit Gas zu füllende Referenzdruckkammer (18) zum Reifeninneren hin abschließt, mit einem im Schaltergehäuse isoliert durchgeführten Schaltkontakt (19), der bei ausreichendem Luftdruck im Reifen an einer Schaltfläche der Membran anliegt und beim Absinken des Luftdrucks im Reifen unter einem vorgegebenen Wert einen elektrischen Stromkreis öffnet, indem sich die Membran vom Schaltkontakt abhebt, sowie mit einem am Schaltkontakt angeschlossenen Schwingkreis (22, 23), der an einer der Membran abgewandten Seite des Schaltergehäuses angeordnet ist, dadurch gekennzeichnet, daß das Schaltergehäuse (16) und der Schwingkreis (22, 23) in einer zum Reifeninneren hin offenen Isolierstoffkapsel (29) aus wärmeisolierendem Werkstoff befestigt ist, die in eine entsprechende Öffnung einer Felge (11) einsetzbar ist.

2. Druckschalter nach Anspruch 1, dadurch gekennzeichnet, daß die Isolierstoffkapsel (29) mit einem das Schaltergehäuse (16) umgebenden Gewindeansatz (30) in eine Gewindebohrung (14) der Felge (11) einschraubbar ist.

3. Druckschalter nach Anspruch 2, dadurch gekennzeichnet, daß der Gewindeansatz (30) der Isolierstoffkapsel (29) über die Ebene der Membran (17) hinaus vorsteht.

4. Druckschalter nach Anspruch 1, dadurch gekennzeichnet, daß der Kondensator (22) des Schwingkreises in der Bohrung (26) eines zylindrischen Spulenkörpers (27) angeordnet ist, der die Spule (23) des Schwingkreises trägt und mit dem Schaltergehäuse (16) eine vormontierte, zylindrische Baueinheit (28) mit gleichem Außendurchmesser bildet.

5. Druckschalter nach Anspruch 4, dadurch gekennzeichnet, daß die zylindrische Baueinheit (28) in der Isolierstoffkapsel (29) verklebt ist.

6. Druckschalter nach Anspruch 1, dadurch gekennzeichnet, daß die Isolierstoffkapsel (29) auf ihrer Innenseite im oberen Bereich mit einer Ringwulst (31) versehen ist, an der das Schaltergehäuse (16) mit einem Preßsitz befestigt ist.

7. Druckschalter nach Anspruch 1, dadurch gekennzeichnet, daß die Referenzdruckkammer (18) durch eine Gehäusebohrung (24) mit Gas gefüllt ist, die durch eine eingepreßte Metallkugel (25) gasdicht verschlossen ist.

## Claims

1. Pneumatically operable pressure switch for tyre pressure monitoring having an annular, electrically conductive membrane (17) fixed on a switch housing (16), which membrane closes off from the tyre interior a reference pressure chamber (18) to be filled with gas, having a switching contact (19), passing through an insulating grommet in the switch housing, which switching contact rests against a switching surface of the membrane whenever there is adequate air pressure in the tyre and opens an electrical circuit whenever the air pressure in the tyre drops below a predetermined value by the membrane lifting off the switching contact, as well as having an oscillating circuit (22, 23) connected to the switching contact, which circuit is arranged on a side of the switch housing facing away from the membrane, characterised in that the switch housing (16) and the oscillating circuit (22, 23) are fixed in an insulant capsule (29) made of thermal insulating material and open towards the tyre interior, which capsule can be fitted into an appropriate opening of a wheel rim (11).

2. Pressure switch according to Claim 1, characterised in that the insulant capsule (29) can be screwed into a threaded bore (14) of the wheel rim (11) by a threaded neck (30) surrounding the switch housing (16).

3. Pressure switch according to Claim 2, characterised in that the threaded neck (30) of the insulant capsule (29) protrudes beyond the plane of the membrane (17).

4. Pressure switch according to Claim 2, characterised in that the capacitor (22) of the oscillating circuit is arranged in the bore (26) of a cylindrical coil shell (27) which carries the coil (23) of the oscillating circuit and, together with the switch housing (16), forms a prefabricated, cylindrical assembly (28) of the same external diameter.

5. Pressure switch according to Claim 4, characterised in that the cylindrical assembly (28) is bonded in the insulant capsule (29).

6. Pressure switch according to Claim 1, characterised in that the insulant capsule (29) is provided on its inside, in the upper region, with an annular bead (31), on which the switch housing (16) is fixed by a press fit.

7. Pressure switch according to Claim 1, characterised in that the reference pressure chamber (18) is filled with gas through a housing bore (24), which is sealed gas-tight by means of a pressed-in metal ball (25).

## Revendications

1. Commutateur à pression actionné pneumatiquement pour la surveillance de la pression d'un bandage pneumatique pourvu d'une membrane (17) électriquement conductrice, fixée en forme d'anneau à un boîtier de commutateur (16), et qui ferme vers l'intérieur du bandage pneumatique une chambre sous pression de référence (18) à remplir de gaz, d'un contact de commutation (19) réalisé en étant isolé dans le boîtier de commutateur, et qui, lorsque la pression d'air est suffisante dans le bandage pneumatique, s'applique contre la surface de commutation de la membrane et, lorsque la pression d'air dans le bandage pneumatique s'abaisse au-dessous d'une valeur prédéterminée, ouvre un circuit de courant électrique du fait que la membrane se détache du contact de commutation, ainsi que d'un circuit oscillant (22, 23) raccordé au contact de commutation et disposé sur une face du boîtier de commutateur (16) située à l'opposé de la membrane, caractérisé en ce que le boîtier de commutateur (16) et le circuit oscillant (22, 23) sont fixés dans une boîte d'isolation (29) en matériau isolant à la chaleur, ouverte vers l'intérieur du bandage pneumatique et qui s'insère dans une ouverture correspondante d'une jante (11).

2. Commutateur à pression selon la revendication 1, caractérisé en ce que la boîte en matière isolante (29) se visse par une embase filetée (30), entourant le boîtier de commutateur (16), dans un taraudage (14) de la jante (11).

3. Commutateur à pression selon la revendication 2, caractérisé en ce que l'embase filetée (30) de la boîte en matière isolante (29) dépasse en hauteur le plan de la membrane (17).

4. Commutateur à pression selon la revendication 1, caractérisé en ce que le condensateur (22) du circuit oscillant est disposé dans l'alésage (26) d'une armature de bobine (27) cylindrique, qui porte la bobine (23) du circuit oscillant et forme avec le boîtier de commutateur (16) une unité de construction (28) cylindrique pré-montée, présentant un seul et même diamètre.

5. Commutateur à pression selon la revendication 4, caractérisé en ce que l'unité de construction cylindrique (28) est collée dans la boîte en matière isolante (29).

6. Commutateur à pression selon la revendication 1, caractérisé en ce que la boîte en matière isolante (29) est pourvue sur sa face intérieure, dans la zone supérieure, d'un bourrelet annulaire (31), auquel le boîtier de commutateur (16) est fixé par un appui serré.

7. Commutateur à pression selon la revendication 1, caractérisé en ce que la chambre sous pression de référence (18) est remplie de gaz par un alésage de boîtier (24) qui est fermé de façon étanche au gaz par une bille de métal (25) enfoncée.

# FIG. 1

# FIG. 2